# EUROPEAN PATENT APPLICATION

(11) **EP 1 885 087 A1**
(43) Date of publication of application: **06.02.2008**
(21) Application number: 06118334.9
(22) Date of filing: 02.08.2006
(51) Int. Cl.: H04L 12/56

(54) **Method, device and software for controlling the data traffic between a first computer network and a second computer network**

(71) Applicant: ISS Manufacturing Limited, Chain Wan, Hong Kong (CN)
(72) Inventor: Tsui, Ivan, Hong Kong (CN)
(74) Representative: Pesce, Michele

(57) **Abstract**

The method for controlling the data traffic between a first computer network and a second computer network connected to each other through the internet comprises the steps of classifying the data to be transmitted as high and low priority data and of transmitting the high priority data within a pre-fixed time from the classification, the low priority data being transmitted only when enough bandwidth is available. The device for controlling the data traffic comprises a classifier arranged to classify the data to be transmitted as high and low priority data and a scheduler arranged to handle the high and low priority data for transmission and to transmit the high priority data within a pre-fixed time from the classification and the low priority data only when enough bandwidth is available.

## Description

The present invention relates to a method, a device and software for controlling the data traffic between a first computer network and a second computer network.

As known in the art computers work running many software at the same time (multitasking); each of such software is arranged to perform a particular operation which, generally, is not related to the operations performed by other software.

Moreover, nowadays computers usually work connected to each other (to exchange data) in internal network (LAN) and/or through the internet (WAN).

In particular, the connection through the internet is performed dividing in packets the data to be transmitted each containing both service information (for example the address of the particular computer in the WEB) and the data to be transmitted.

The packets are sent through the internet and, each of them independently the other, reach the addressee where the data are divided from the service information and are recollected.

Nowadays there are on the market computer programs which allow transmission of vocal messages by sampling the voice and dividing the data related to it in packets to be transmitted through the internet.

When such data are collected by a receiving computer, they are used to re-build the information about the sender's voice to be made accessible through a loudspeaker.

Nevertheless, in order to have a natural and fluid voice at the receiving computer, all the data must be collected (by the receiving computer) within a pre-fixed time from sending.

The current structure of network protocols and behaviours of LAN/WAN traffic works by a "first come first serve" principle; therefore the packets which are handled first are the one generated/received first.

In addition, some protocols with high data bursts such as HTTP or FTP are likely to take as much bandwidth as possible until their sessions are done.

This makes even harder to handle a LAN with N computers and it eventually results in bad quality of calls due to congestions in the network.

Congestion typically occurs where multiple links fed to a single link, such as where internal LANs are connected to WAN links.

Congestion also occurs at routers in core networks where nodes are subjected to more traffic than they are designed to handle.

TCP/IP networks such as the internet are especially susceptible to congestion because of their basic connectionless nature, there are no virtual circuits with guaranteed bandwidth, packets are injected by any host at any time and are variable in size, which make predicting traffic patters and providing guaranteed services impossible.

For such reasons, when performing a voice communication by the internet, it is very difficult to ensure that data relating to voice transmission are received within the prefixed time, in order to avoid transmission jitter.

The technical aim of the present invention is therefore to provide a method, a device and software by which the said problems of the known art are eliminated.

Within the scope of this technical aim, an object of the invention is to provide a method, a device and software which allows reliability of data transmission.

Particularly, according to the present invention reliability of data transmission about the vocal messages (voice) is improved.

Another object of the invention is to provide a method, a device and software implementing a no need to configure device.

The technical aim, together with these and further objects, are attained according to the invention by providing a method, a device and software for controlling the data traffic between a first computer network and a second computer network in accordance with the accompanying claims.

Further characteristics and advantages of the invention will be more apparent from the description of a preferred but non-exclusive embodiment of the method, device and software according to the invention, illustrated by way of non-limiting example in the accompanying drawings, in which:

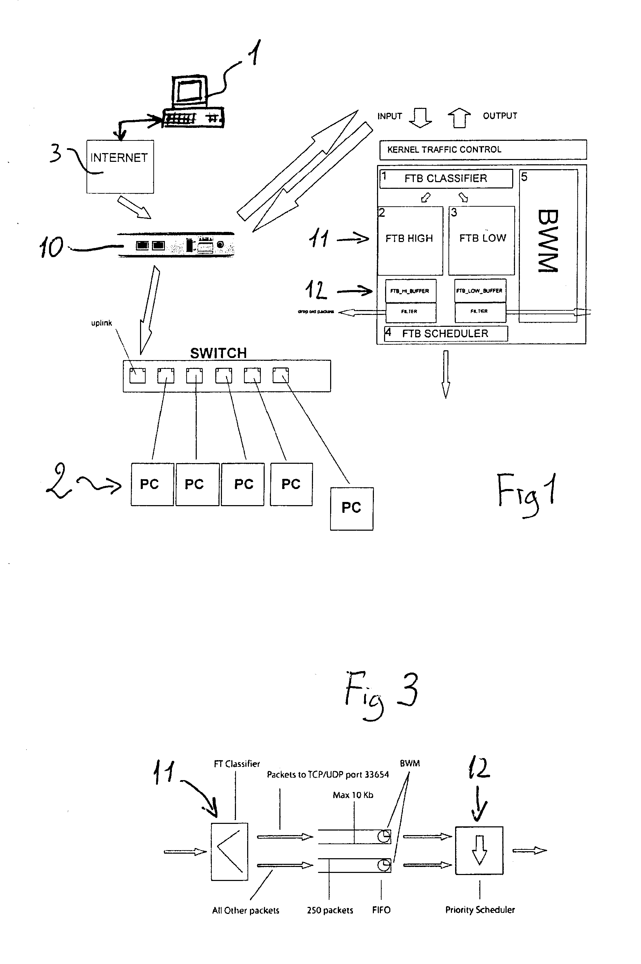

Figure 1 is a schematic overview of the entire setup;
Figure 2 is an overview of the traffic handling; and
Figure 3 is an overview of how the classifier works.

The method for controlling the data traffic between a first computer network 1 and a second computer network 2 connected to each other through the internet 3 comprises the steps of classifying the data to be transmitted as high and low priority data and transmitting the high priority data within a pre-fixed temporal interval from the classification, whereas the low priority data are transmitted only when enough bandwidth is available.

In other words, data packets are re-scheduled and re-queued to ensure reliability of transmission quality.

Low priority data are transmitted in accordance with a random early detection and/or a time-span rule.

After classification (as known in the art) both high and low priority data are handled to check whether they have been sent to the right destination in the right time and there are automatically detected the network conditions to adjust settings for the framework controlling the traffic to and from the internet.

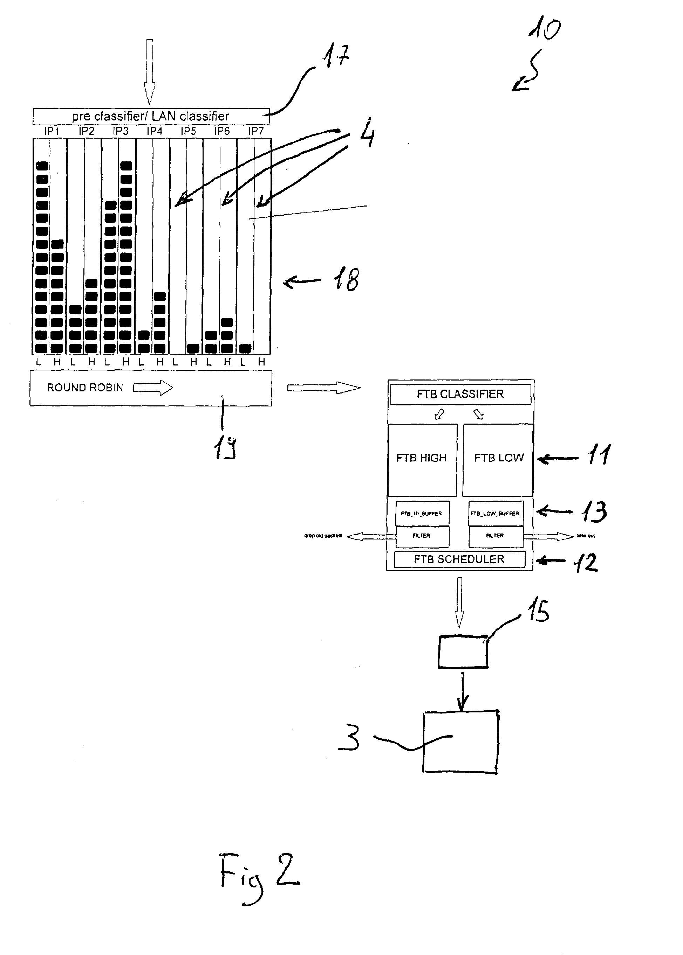

If a LAN is provided (see for example the computer network 2), before the data have been classified as high and low priority data, they are divided into buckets 4; each bucket comprises data originating from one computer of a computer network (for example fig. 2 shows seven buckets), of course such step is not needed if only one computer is provided because all the data of such computer constitute the data of a bucket.

Within each buckets 4, the data related to the voice transmission are classified as pre-high priority data and the other data are classified as pre-low priority data.

The pre-high priority data are transmitted to the classification whereas the pre-low priority data are stored in a memory until there is no pre-high priority data to be transmitted anymore; in such a case (i.e. when there is no pre-high priority data to be transmitted) also the pre-low priority data are transmitted.

The method according to the invention is implemented by a device 10 comprising a classifier 11 arranged to classify the data to be transmitted as high and low priority data and a scheduler 12 arranged to handle the high and low priority data for transmission and to transmit the high priority data within a pre-fixed time from classification and the low priority data only when enough bandwidth is available.

The device also comprises, between the classifier and the scheduler, a first RAM memory 13 arranged to store the low priority data before they are transmitted and downstream of the scheduler a BWM 15 arranged to automatically detect the bandwidth and adjusting the settings of the framework controlling the traffic.

In addition, there is also provided a pre-classifier 17 arranged to divide the data originating from a computer network in buckets and to classify the data related to the voice transmission as pre-high priority data and the other data as pre-low priority data.

The device also comprises a second RAM memory 18 arranged to store the pre-low priority data before they are transmitted and a round robin 19 arranged to transmit the high and low priority data from the RAM memory to the classifier 11 according to a prefixed rule (discussed in the method) .

In an advantageous embodiment of the invention the method is implemented by software code portions.

The operation of the device and method of the invention are apparent from that described and illustrated and are substantially the following.

The data coming into and from a LAN are divided at the pre-classifier 17 and are stored (for each PC of a LAN) as high and low pre-priority data in the RAM memory 18; the data relating to the voice communication are classified as pre-high priority data whereas other data (for example data relating to files which have been downloaded at the same time) are classified as pre-low priority data.

The pre-high priority data are transmitted through the round robin 19 to the classifier 11 where they are handled (transmitted or received) within a prefixed time.

The pre-low priority data are transmitted when there are no pre-high priority data to be transmitted at the round robin 19 and the low priority data are only transmitted when enough bandwidth is available.

The quality of the voice communication is not reduced by the contemporaneous downloading of files, because the data related to the voice communication are always handled within a pre-fixed time limit able to guarantee the correctness of the communication.

It has been found in practice that the method, the device and the software according to the invention are particularly advantageous because they allow both voice conversation by the internet and files downloading without the one negatively affecting the other.

The method, the device and the software conceived in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

## Claims

1. Method for controlling the data traffic between a first computer network and a second computer network connected to each other through the internet, **characterised by** classifying the data to be transmitted as high and low priority data and by transmitting the high priority data within a pre-fixed time from the classification, the low priority data being transmitted only when enough bandwidth is available.

2. Method as claimed in claim 1, **characterised in that** the low priority data are transmitted in accordance with a random early detection and/or a time-span rule.

3. Method as claimed in one or more of the previous claims, **characterised in that** both the high and low priority data are handled to check whether they have been sent to the right destination in the right time.

4. Method as claimed in one or more of the previous claims, **characterised by** automatically detecting the network conditions and by adjusting settings for the framework controlling the traffic to and from the internet.

5. Method as claimed in one or more of the previous claims, **characterised in that**, before the data have been classified as high and low priority data, they are divided in buckets, each bucket comprising the data originating from one computer of a computer network.

6. Method as claimed in one or more of the previous claims, **characterised in that**, before the data have been classified as high and low priority data, the data related to the voice transmission are classified as pre-high priority data and the other data are classified as pre-low priority data.

7. Method as claimed in one or more of the previous claims, **characterised in that**, after the data have been classified as pre-high and pre-low priority data, the pre-high priority data are transmitted to the classification, and the pre-low priority data are stored in a memory until there is no pre-high priority data to be transmitted anymore and, when there is no pre-high priority data to be transmitted also the pre-low priority data are transmitted.

8. Device for controlling the data traffic between a first computer network and a second computer network connected to each other through the internet, **characterised by** comprising a classifier arranged to classify the data to be transmitted as high and low priority data and by comprising a scheduler arranged to handle the high and low priority data for transmission and to transmit the high priority data within a pre-fixed time from the classification and the low priority data only when enough bandwidth is available.

9. Device as claimed in claim 8, **characterised by** comprising, between said classifier and said scheduler, a memory arranged to store the low priority data before they are transmitted and a BWM arranged to automatically detect the bandwidth and adjusting the settings of the framework controlling the traffic.

10. Device as claimed in claim 8 onwards, **characterised by** comprising a pre-classifier arranged to divide the data originating from a computer network in buckets and to classify the data related to the voice transmission as pre-high priority data and the other data as pre-low priority data, the device also comprising a RAM memory arranged to store the pre-low priority data before they are transmitted and a round robin arranged to transmit the high and low priority data from the RAM memory to the classifier according to a prefixed rule.

11. Computer program product comprising software code portions for performing the steps of one or more of claims 1-7.
